# EUROPÄISCHE PATENTSCHRIFT

(11) **EP 2 761 361 B1**
(45) Veröffentlichungstag und Bekanntmachung des Hinweises auf die Patenterteilung: **26.04.2017**
(21) Anmeldenummer: 12778608.5
(22) Anmeldetag: 27.09.2012
(51) Int. Cl.: G09G 5/36, G06T 15/10, G02B 27/22, H04N 13/04, G02B 27/01

(54) **HEAD-UP-DISPLAY MIT MEHREREN PROJEKTIONSEBENEN**
HEAD-UP DISPLAY HAVING A PLURALITY OF PROJECTION PLANES
AFFICHAGE TÊTE HAUTE COMPORTANT PLUSIEURS PLANS DE PROJECTION

(30) Priorität: 01.10.2011 DE 102011114762
(43) Veröffentlichungstag der Anmeldung: 06.08.2014
(73) Patentinhaber: Johnson Controls Automotive Electronics SAS, 95892 Cergy-Pontoise Cedex (FR)
(72) Erfinder: GALL, Hugues, F-78630 Orgeval (FR)
(74) Vertreter: Wolff, Felix
(86) Internationale Anmeldenummer: PCT/EP2012/004055
(87) Internationale Veröffentlichungsnummer: WO 2013/045094

(56) Entgegenhaltungen:
- JP-A- 10 068 906
- US-A- 5 510 983
- US-A1- 2009 009 594
- US-A1- 2011 194 167

## Beschreibung

Die vorliegende Erfindung betrifft ein Head-up-Display in einem Kraftfahrzeug.

Derartige Head-up-Displays werden gemäß dem Stand der Technik dazu eingesetzt, für den Fahrer interessante Informationen auf die Windschutzscheibe des Kraftfahrzeuges zu projizieren. Diese Displays haben jedoch den Nachteil, dass die Menge der Informationen, die dargestellt werden können, eingeschränkt ist.

US 2009/009594 A1 offenbart ein Head-up-Display. Es war deshalb die Aufgabe der vorliegenden Erfindung, ein Head-up-Display zur Verfügung zu stellen, das die Nachteile des Standes der Technik nicht aufweist.

Gelöst wird die Aufgabe mit einem Head-up Display gemäß Anspruch 1. Die vorliegende Erfindung betrifft ein Head-up-Display, mit dem Informationen, beispielsweise für den Fahrer eines Fahrzeugs, dargestellt werden können, ohne dass dafür der Kopf und/oder die Augen des Fahrers bewegt werden muss/müssen. Bei den Informationen kann es sich beispielsweise um fahrzeugrelevante Informationen, wie Geschwindigkeit, Drehzahl etc. oder um andere Informationen wie beispielsweise Infotainment-Informationen oder Anweisungen eines Navigationssystems handeln.

Erfindungsgemäß werden nun auf den Projektionsflächen Informationen, beispielsweise für den Fahrer des Kraftfahrzeuges, dargestellt. Vorzugsweise liegen die Projektionsflächen räumlich hintereinander. Besonders bevorzugt sind beide Projektionsflächen in Fahrtrichtung sowie hintereinander vorgesehen. Bei einer dieser Projektionsflächen kann es sich um die Windschutzscheibe eines Kraftfahrzeuges handeln. Vorzugsweise ist jedoch mindestens eine, besonders bevorzugt mehrere Projektionsfläche(n) jeweils eine virtuelle Projektionsfläche. Vorzugweise beträgt der Abstand zwischen einer Projektionsfläche, insbesondere einer virtuellen Projektionsfläche, und dem Auge des Betrachters 1,6 - 2,4, besonders bevorzugt 1,8 - 2,0 Meter. Auf dieser ersten Projektionsfläche werden besonders bevorzugt Informationen wie beispielsweise die Geschwindigkeit des Fahrzeugs, vorhandene Geschwindigkeitsbeschränkungen und/oder Informationen eines Navigationssystems dargestellt. Besonders bevorzugt ist der Abstand zwischen einer weiteren, zweiten Projektionsfläche und dem Auge des Betrachters geringer als der Abstand zwischen der ersten Projektionsfläche und dem Auge des Betrachters. Auf dieser weiteren, zweiten Projektionsfläche werden vorzugsweise sicherheitsrelevante Informationen, Betriebsinformationen des Fahrzeuges und/oder Informationen eines Infotainment-Systems dargestellt. Auf beiden Projektionsflächen können Zahlen, Buchstaben und/oder Symbole dargestellt werden.

Die Informationen, die auf der jeweiligen Projektionsfläche abgebildet werden, können unterschiedlich sein oder in einem direkten Zusammenhang zueinander stehen. Vorzugsweise können mit dem erfindungsgemäßen Head-up-Display 3D-Abbildungen erzeugt werden.

Auf den Projektionsflächen können gleichzeitig und/oder nacheinander Informationen dargestellt werden.

Vorzugsweise sind die Projektionsflächen so angeordnet, dass der Betrachter Informationen von ihnen ablesen kann, ohne seinen Kopf zu bewegen. Beispielsweise reicht eine Bewegung des/der Auges(en) um Informationen von der einen oder der anderen Projektionsfläche zu entnehmen. Alternativ oder zusätzlich ist es möglich, durch eine unterschiedliche Fokussierung des/der Auges(en) Informationen von der einen oder der anderen Projektionsfläche abzulesen.

Das erfindungsgemäße Head-up-Display kann eine oder mehrere bildgebende Einheiten aufweisen. Vorzugsweise ist die Anzahl der bildgebenden Einheiten gleich der Anzahl der Projektionsflächen. Es ist jedoch auch möglich, mit einer bildgebenden Einheit mehrere Abbilder gleichzeitig oder sequentiell zu erzeugen, die gleichzeitig oder sequentiell in der jeweiligen Projektionsfläche dargestellt werden. Für den Fall einer sequentiellen Darstellung ist die Frequenz der erzeugten Bilder vorzugsweise so hoch, dass es für das menschliche Auge nicht mehr auflösbar ist. Auch wenn die Bilder sequentiell dargestellt werden, hat der Betrachter dennoch den Eindruck, dass sie gleichzeitig vorhanden sind.

Vorzugsweise weist das optische Mittel mindestens ein bewegliches Teil auf, mit dem die Abbilder in der jeweiligen Projektionsfläche erzeugt werden. Durch die Bewegung des optischen Mittels kann zwischen den Projektionsflächen hin und her geschaltet werden.

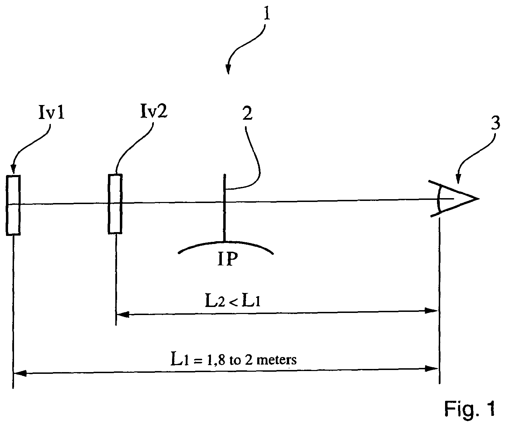

Im Folgenden wird die Erfindung anhand der einzigen Figur 1 erläutert. Diese Erläuterungen sind lediglich beispielhaft und schränken den allgemeinen Erfindungsgedanken nicht ein.

Figur 1 zeigt das erfindungsgemäße Head-up-Display 1. Dieses weist eine nicht dargestellte bildgebende Einheit auf, die die zu projizierenden Abbilder mit einem optischen Mittel 2, hier mit einem Spiegel, der hier im Bereich des Armaturenbrettes IP eines Kraftfahrzeuges angeordnet ist, auf zwei Projektionsflächen Iv1, Iv2 projiziert. Bei mindestens einer, hier beiden Projektionsflächen handelt es sich um virtuelle Projektionsflächen. Die beiden Projektionsflächen Iv1, Iv2 sind in unterschiedlichen Abständen L1, L2 von dem Auge 3 eines Betrachters, beispielsweise des Fahrers des Kraftfahrzeuges, angeordnet. Vorzugsweise beträgt der Abstand der einen Projektionsfläche Iv1 1,8 - 2,0 Meter, d. h. diese Projektionsfläche befindet sich im Raum vor der Windschutzscheibe des Kraftfahrzeuges. Besonders bevorzugt weist die andere Projektionsfläche Iv2 einen geringeren Abstand zum Auge des Betrachters auf als die Projektionsfläche Iv1. Vorzugsweise befindet sie sich ebenfalls im Raum vor der Windschutzscheibe des Kraftfahrzeuges. Auf den beiden Projektionsflächen kann nacheinander und/oder gleichzeitig Information dargestellt werden. Die Information, die auf einer Projektionsfläche Iv1 dargestellt wird, kann in einem Zusammenhang zu der Information stehen, die auf der anderen Projektionsfläche Iv2 dargestellt wird, oder völlig unterschiedlichen Inhalts sein. Beispielsweise können auf beiden Projektionsflächen zusammen 3D-Bilder erzeugt werden. Vorzugsweise werden auf der Projektionsfläche Iv1 Informationen betreffend die Geschwindigkeit des Fahrzeuges, vorhandene Geschwindigkeitsbegrenzungen und/oder Informationen eines Navigationssystems dargestellt. Auf der Projektionsfläche Iv2 werden vorzugsweise Informationen betreffend den Betriebszustand des Kraftfahrzeuges und/oder Infotainment-Informationen dargestellt.

### Bezugszeichenliste:

- 1: Head-up-Display
- 2: optisches Mittel, Spiegel
- 3: Auge des Betrachters
- IP: Armaturenbrett
- v1: erste Projektionsfläche, erste virtuelle Projektionsfläche
- Iv2: zweite Projektionsfläche, zweite virtuelle Projektionsfläche
- L1: Abstand zwischen dem Auge des Betrachters und der ersten Projektionsfläche Iv1
- L2: Abstand zwischen dem Auge des Betrachters und der ersten Projektionsfläche Iv2

## Patentansprüche

1. Head-up-Display (1) mit einer bildgebenden Einheit, die Abbilder erzeugt, und einem optischen Mittel (2), wobei das optische Mittel (2) dazu ausgebildet ist, die Abbilder in mindestens zwei Projektionsflächen (Iv1, Iv2) zu projizieren, wobei die zwei Projektionsflächen (Iv1, Iv2) jeweils einen unterschiedlichen Abstand zum Auge (3) eines Betrachters aufweisen, wobei die bildgebende Einheit ferner dazu ausgebildet ist, mehrere Abbilder gleichzeitig oder sequentiell zu erzeugen, wobei die mindestens zwei Projektionsflächen (Iv1, Iv2) dazu ausgebildet sind, die mehreren Abbilder gleichzeitig oder sequentiell in der jeweiligen Projektionsfläche darzustellen, wobei im Falle, dass die mehreren Abbilder sequentiell dargestellt werden, die Frequenz der erzeugten Abbilder so hoch ist, dass sie für das menschliche Auge nicht mehr auflösbar ist, **dadurch gekennzeichnet, dass** das optische Mittel mindestens ein bewegliches Teil aufweist, wobei das bewegliche Teil dazu ausgebildet ist, durch seine Bewegung zwischen den Projektionsflächen (Iv1, Iv2) hin- und herzuschalten.

2. Head-up-Display (1) nach Anspruch 1, **dadurch gekennzeichnet, dass** mindestens eine Projektionsfläche (Iv1, Iv2) eine virtuelle Projektionsfläche ist.

3. Head-up-Display nach einem der voranstehenden Ansprüche, **dadurch gekennzeichnet, dass** die Projektionsflächen (Iv1, Iv2) hintereinander liegen.

4. Head-up-Display nach Anspruch 3, **dadurch gekennzeichnet, dass** der Abstand zwischen den Projektionsflächen (Iv1, Iv2) 1,6 - 2,4 m, vorzugsweise 1,8 - 2,0 m beträgt.

5. Head-up-Display nach einem der voranstehenden Ansprüche, **dadurch gekennzeichnet, dass** die auf den Projektionsflächen (Iv1, Iv2) dargestellten Abbildungen zusammen ein 3D-Bild ergeben.

6. Head-up-Display nach einem der Ansprüche 1 - 3, **dadurch gekennzeichnet, dass** der Informationsgehalt der auf den Projektionsflächen (Iv1, Iv2) dargestellten Abbildungen unabhängig voneinander ist.

7. Head-up-Display nach einem der voranstehenden Ansprüche, **dadurch gekennzeichnet, dass** auf den Projektionsflächen (Iv1, Iv2) gleichzeitig oder nacheinander Informationen dargestellt werden.

8. Head-up-Display nach einem der voranstehenden Ansprüche, **dadurch gekennzeichnet, dass** es zwei bildgebenden Einheiten aufweist.

## Claims

1. Head-up display (1) having an imaging unit which generates images, and having an optical means (2), wherein the optical means (2) is configured to project the images into at least two projection surfaces (Iv1, Iv2), wherein the two projection surfaces (Iv1, Iv2) in each case have a different distance from the eye (3) of an observer, wherein the imaging unit is further configured to simultaneously or successively produce a plurality of images, wherein the at least two projection surfaces (Iv1, Iv2) are configured to simultaneously or successively display the plurality of images in the respective projection surface, wherein in the case that the plurality of images are successively displayed, the frequency of the generated images is so high that it is no longer resolvable for the human eye, **characterized in that** the optical means has at least one movable part, wherein the movable part is configured, owing to the movement thereof, to switch between the projection surfaces (Iv1, Iv2).

2. Head-up display (1) according to Claim 1, **characterized in that** at least one projection surface (Iv1, Iv2) is a virtual projection surface.

3. Head-up display according to one of the preceding claims, **characterized in that** the projection surfaces (Iv1, Iv2) are arranged one behind another.

4. Head-up display according to Claim 3, **characterized in that** the distance between the projection surfaces (Iv1, Iv2) is 1.6-2.4 m, preferably 1.8-2.0 m.

5. Head-up display according to one of the preceding claims, **characterized in that** the images displayed on the projection surfaces (Iv1, Iv2) together produce a 3D image.

6. Head-up display according to one of Claims 1-3, **characterized in that** the information content of the images displayed on the projection surfaces (Iv1, Iv2) are independent of one another.

7. Head-up display according to one of the preceding claims, **characterized in that** information items are displayed on the projection surfaces (Iv1, Iv2) simultaneously or successively.

8. Head-up display according to one of the preceding claims, **characterized in that** it has two imaging units.

## Revendications

1. Affichage tête haute (1) avec une unité d'imagerie qui créée des reproductions et un moyen optique (2), le moyen optique (2) étant conçu pour projeter les reproductions dans au moins deux surfaces de projection (Iv1, Iv2), les deux surfaces de projection (Iv1, Iv2) présentant chacune un écart différent par rapport à l'oeil (3) d'un observateur,
l'unité d'imagerie étant conçue par ailleurs pour créer plusieurs reproductions de manière simultanée ou séquentielle, les au moins deux surfaces de projection (Iv1, Iv2) étant conçues pour représenter de manière simultanée ou séquentielle les plusieurs reproductions dans la surface de projection concernée, dans le cas où les plusieurs reproductions sont représentées de manière séquentielle, la fréquence des reproductions créées étant si élevée qu'elle n'est plus résoluble par l'oeil humain, **caractérisé en ce que** le moyen optique comporte au moins une partie mobile, la partie mobile étant conçue pour basculer par son déplacement entre les surfaces de projection (Iv1, Iv2).

2. Affichage tête haute (1) selon la revendication 1, **caractérisé en ce qu'**au moins une surface de projection (Iv1, Iv2) est une surface de projection virtuelle.

3. Affichage tête haute selon l'une quelconque des revendications précédentes, **caractérisé en ce que** les surfaces de projection (Iv1, Iv2) sont placées les unes derrière les autres.

4. Affichage tête haute selon la revendication 3, **caractérisé en ce que** l'écart entre les surfaces de projection (Iv1, Iv2) s'élève à de 1,6 à 2,4 m, de préférence à de 1,8 à 2,0 m.

5. Affichage tête haute selon l'une quelconque des revendications précédentes, **caractérisé en ce que** les reproductions représentées sur les surfaces de projection (Iv1, Iv2) donnent ensemble une image en 3D.

6. Affichage tête haute selon l'une quelconque des revendications 1 à 3, **caractérisé en ce que** la teneur en informations des reproductions représentées sur les surfaces de projection (Iv1, Iv2) est mutuellement indépendante.

7. Affichage tête haute selon l'une quelconque des revendications précédentes, **caractérisé en ce que** des informations sont représentées simultanément ou successivement sur les surfaces de projection (Iv1, Iv2).

8. Affichage tête haute selon l'une quelconque des revendications précédentes, **caractérisé en ce que** qu'il comporte deux unités d'imagerie.
